# EUROPÄISCHE PATENTSCHRIFT

(11) **EP 3 453 672 B1**
(45) Veröffentlichungstag und Bekanntmachung des Hinweises auf die Patenterteilung: **16.04.2025**
(21) Anmeldenummer: 18189893.3
(22) Anmeldetag: 21.08.2018
(51) Int. Cl.: B66F 9/06, B65G 1/00

(54) **VERFAHREN UND VORRICHTUNG ZUR KOLLISIONSVERMEIDUNG BEIM BETRIEB EINES FLURFÖRDERZEUGS**
METHOD AND DEVICE FOR COLLISION AVOIDANCE DURING THE OPERATION OF AN INDUSTRIAL TRUCK
PROCÉDÉ ET DISPOSITIF DE PRÉVENTION DE COLLISION LORS DU FONCTIONNEMENT D'UN CHARIOT DE MANUTENTION

(30) Priorität: 12.09.2017 DE 102017120996
(43) Veröffentlichungstag der Anmeldung: 13.03.2019
(73) Patentinhaber: STILL GmbH, 22113 Hamburg (DE)
(72) Erfinder: SCHÜTHE, Dennis, 21255 Tostedt (DE); ABEL, Bengt, 21335 Lüneburg (DE)
(74) Vertreter: Patentship Patentanwaltgesellschaft

(56) Entgegenhaltungen:
- EP-A1- 2 339 376
- EP-A1- 2 555 014
- EP-A1- 2 851 331
- DE-A1- 102014 209 338
- US-A1- 2011 093 134
- US-A1- 2014 074 341
- US-A1- 2016 313 740
- US-B1- 9 358 975

## Beschreibung

Die Erfindung betrifft ein Verfahren zur Kollisionsvermeidung beim Betrieb eines Flurförderzeugs, wobei das Flurförderzeug eine Kamera aufweist, die einen Überwachungsbereich erfasst und die dabei ermittelten Bilddaten an eine Bildverarbeitungseinrichtung liefert, welche durch Auswertung der Bilddaten Handlungsanweisungen und/oder Steuerungsbefehle für den Betrieb des Flurförderzeugs erstellt, sowie ein entsprechend ausgestattetes Flurförderzeug.

Flurförderzeuge müssen im Einsatz bei Industrieunternehmen und Handelsbetrieben immer höheren Ansprüchen hinsichtlich Schnelligkeit und Wirtschaftlichkeit genügen. Daher werden vermehrt automatisierte oder teilautomatisierte Flurförderzeuge verwendet, bei denen der Fahrer zumindest teilweise Steuerungsaufgaben an die Technik des Flurförderzeugs abgeben kann und sich überwiegend der Aufnahme und Abgabe von Gütern, zum Beispiel von Waren in einem Warenlager, kümmern kann. Auch autonome Flurförderzeuge sind bereits im Einsatz, die sich fahrerlos zum Beispiel durch Lagerhallen bewegen und selbsttätig Positionen zum Aufnehmen und Abgeben von Waren ansteuern.

In all diesen Fällen sind Systeme zur Kollisionsvermeidung erforderlich, damit ein sicherer Betrieb der Flurförderzeuge gewährleistet ist und ein unbeabsichtigtes Auffahren auf ein Hindernis oder gar eine Verletzung einer auf der Fahrbahn des Flurförderzeugs befindlichen Person verhindert wird.

So ist zum Beispiel aus der EP 1 728 757 B1 ein Flurförderzeug bekannt, bei dem Kollisionsvermeidungssysteme oder Kollisionswarnsysteme zum Einsatz kommen. Diese beruhen auf einer berührungslosen Entfernungsmessung, insbesondere mittels elektromagnetischer Wellen und/oder Ultraschall. Hierzu wird vorzugsweise eine Lasereinheit und/oder eine Radareinheit verwendet. Dreidimensionale Objekte können z.B. mittels Laserstrahlung erfasst werden.

In der EP 2 851 331 A1 ist ein Verfahren zur Steuerung eines Kommissionierflurförderzeugs beschrieben. Zum Kommissionieren, dem Zusammenstellen von Warenlieferungen in einem Warenlager, werden sehr häufig Kommissionierflurförderzeuge als eine Form von Flurförderzeugen eingesetzt. Dabei wird das Kommissionierflurförderzeug mit einem auf Lastgabeln befindlichen Ladungsträger, etwa einer Palette oder einem Drahtgitterkorb, durch die Regalgassen eines Warenlagers bewegt, in denen die zu kommissionierenden bzw. aufzunehmenden Waren gelagert sind. Der Kommissionierer bzw. die ausführende Person entnimmt dabei je nach Auftrag die im Regal befindlichen Waren, legt diese auf bzw. in den Ladungsträger des Kommissionierflurförderzeugs und muss sodann zum nächsten Aufnahmeort innerhalb des Warenlagers bzw. der Regalgasse des Warenlagers für die nächste Ware fahren. Wenn der jeweilige Auftrag zur Kommissionierung vollständig abgearbeitet ist, fährt der Kommissionierer mit dem Kommissionierflurförderzeug zu einer Warenabgabe. In der Summe entsteht durch die Vielzahl der erforderlichen Fahrbewegungen des Flurförderzeugs, die von dem Kommissionierer vorgenommen werden müssen, ein erheblicher Zeitbedarf, da der Kommissionierer zu einer Lenk- und Bedieneinheit des Kommissionierflurförderzeugs gehen muss, um die entsprechenden Fahrschalter zu betätigen und das Fahrzeug bei der Fahrbewegung zu steuern, und im Anschluss wieder zurück an die Position zum Aufnehmen der Waren. Daher schlägt diese Druckschrift ein automatisches Nachführsystem für das Flurförderzeug vor. Hierfür ist ein optischer Sensor vorgesehen, der einen bestimmten Überwachungsbereich erfasst. Wenn der Kommissionierer eine vorgegebene Grenze innerhalb des Überwachungsbereichs überschreitet, wird das Flurförderzeug automatisch nachgeführt. Das Flurförderzeug folgt sozusagen automatisch den Laufbewegungen des Kommissionierers, während er beispielsweise an einer Reihe von Behältern mit den zu kommissionierenden Waren oder einer Regalgasse entlanggeht und diese Waren entnimmt. Immer wenn sich der Kommissionierer entlang der Regalgasse bewegt, so folgt ihm das Flurförderzeug automatisch. Der optische Sensor kann als Kamera ausgeführt sein und die Position einer nachzuführenden Person kann mittels Methoden der Bildverarbeitung erkannt werden. Dabei kann das Flurförderzeug auch eine Personenschutzvorrichtung aufweisen, sodass auch ein autonomer Betrieb möglich ist. Die Personenschutzvorrichtung überwacht einen Nahbereich auf Kollisionen mit Hindernissen oder Personen. Sie kann auf eine Überwachung in einer geringen Höhe über dem Boden, beispielsweise durch Laserscanner, basieren, die in ca. 150 mm Höhe über dem Boden flächig scannen. Die durch den optischen Sensor gewonnenen Daten, insbesondere wenn es sich um dreidimensionale Daten handelt, können neben der Nachführung der Person sowie der Bestimmung einer Sollspur auch allgemein für die Fahrzeugführung verwendet werden, beispielsweise im Sinne eines autonom fahrenden Fahrzeugs.

Die gängigen Methoden zur Kollisionsvermeidung basieren auf Distanzmessung mittels Laser, Ultraschall oder Radar. Dabei wird der direkte Freiraum in Fahrtrichtung des Flurförderzeugs ermittelt. Die Kollisionsvermeidung mittels Laserscanner erfordert einen erheblichen Investitionsaufwand. Ein Laserscanner besteht aus einer Laserdiode und einem Empfänger, die sich in einem motorangetriebenen, rotierenden Kopf befinden, sowie einem hochauflösenden Inkrementalgeber zur Winkelmessung. Das auf ein Hindernis auffallende Laserlicht wird in sich selbst, also zum Sender, bzw. zu einem unmittelbar daneben montierten Empfänger reflektiert. Da es sich bei Laserscanner bzw. Lasersensor um Präzisionsgeräte handelt sowie für die Auswertung der dreidimensionalen Messdaten ein aufwendiger Auswerterechner erforderlich ist und die exakte Kalibrierung des Laserscanners einen erheblichen apparativen Aufwand notwendig macht, ist diese Methode sehr teuer. Andererseits ist die Messgenauigkeit bei Radar-und Ultraschallmethoden nicht hoch genug, um fein darauf reagieren zu können. Kamerabasierte Systeme werden bisher hauptsächlich zur Navigation eingesetzt. Hierzu werden üblicherweise paarweise Kameras zu Stereokamerasystemen zusammengeschaltet, die ein dreidimensionales Bild des gesamten umgebenden Raums aufnehmen. Dabei werden sehr hohe Datenmengen erzeugt, deren Verarbeitung einen erheblichen Rechenaufwand erfordert.

Aus der US 9 358 975 B1 ist ein gattungsgemäßes Verfahren bekannt, bei dem ein Flurförderzeug eine oder mehrere Kameras aufweist, die die Umgebung erfassen und mit denen Abstände zu Objekten in der Umgebung bestimmt werden können.

Die US 2016/0313740 A1 offenbart ein autonomes Flurförderzeug, das anhand von Markierungen auf der Fahrbahn navigiert. Das Flurförderzeug ist zum Erfassen der am Boden angebrachten Markierungen mit einer nach unten orientierten Kamera versehen.

Die EP 2 339 376 A1 offenbart ein Verfahren zur Kollisionsvermeidung beim Betrieb eines Flurförderzeugs, wobei das Flurförderzeug einen Sensor aufweist, der einen Überwachungsbereich erfasst und die dabei ermittelten Sensordaten an eine Verarbeitungseinrichtung liefert, welche durch Auswertung der Sensordaten Handlungsanweisungen und/oder Steuerungsbefehle für den Betrieb des Flurförderzeugs erstellt. Der Sensor ist als Laserscanner ausgebildet, der einen waagerechten Lichtstrahl aussendet. Befinden sich Objekte auf dem Fahrboden, wird der ausgesendete Lichtstrahl reflektiert und aus dem reflektierte Lichtstrahl die Richtung/Winkellage (Winkelstellung einer Ablenkeinheit des Sensors, die mittels des Signals eines Encoders erfasst wird) und die Entfernung (mittels Laufzeitmessung des Lichtstrahls) des Objekts bestimmt.

Die US 2011/093134 A1 offenbart ein System zur Kollisionsvermeidung beim Betrieb von Flurförderzeugen, bei dem die jeweiligen Flurförderzeuge ihre Positionsdaten an ein übergeordnetes Kollisionsvermeidungssystem senden, das aus den Positionsdaten eine Trajektorie jedes Flurförderzeugs berechnet und aus den Trajektorien der Flurförderzeuge Kollisionsbereiche bestimmt, und für den Fall, dass in einem Kollisionsbereich eine Kollision zweier Flurförderzeuge prognostiziert wird, entsprechende Handlungsanweisungen an die Flurförderzeuge sendet.

Die DE 10 2014 209 338 A1 offenbart ein Lichtlaufzeitkamerasystem zur Freifelderkennung in einer Umgebung einer Arbeitsmaschine.

Die EP 2 555 014 A1 offenbart ein Verfahren zur Erfassung von Ebenen im Hinblick auf mögliche störende Objekte durch ein Sensor eines Fahrzeugs.

Der vorliegenden Erfindung liegt die Aufgabe zugrunde, ein Verfahren zur Kollisionsvermeidung bei einem Flurförderzeug zur Verfügung zu stellen, das bei geringem Investitionsaufwand eine sichere Kollisionsvermeidung beim Betrieb von Flurförderzeugen gewährleistet.

Diese Aufgabe wird erfindungsgemäß dadurch gelöst, dass die Kamera auf den in Fahrtrichtung vor dem Flurförderzeug liegenden Fahrboden ausgerichtet ist und einen in Fahrtrichtung vor dem Flurförderzeug befindlichen Überwachungsbereich erfasst und die Kamera einen im Überwachungsbereich liegenden Fahrboden erfasst, die Bildverarbeitungseinrichtung aus den ermittelten Bilddaten den Fahrboden als zusammenhängendes Gebiet erkennt und beim Erkennen von Objekten, die sich von diesem Fahrboden abheben, die Handlungsanweisungen und/oder Steuerungsbefehle zur Kollisionsvermeidung erstellt.

Die Erfindung basiert auf der Überlegung, dass man bei den typischen Einsatzbereichen von Flurförderzeugen, z.B. in Lagerhallen, von ebenen Böden mit homogener Beschaffenheit hinsichtlich Struktur und Farbgebung ausgehen kann. Dabei liegt der Erfindung die Erkenntnis zu Grunde, dass in einer solchen Umgebung eine vereinfachte Kollisionsvermeidungsmethode angewandt werden kann. Es geht im Kern darum, eine Methode zu schaffen, mit der Boden und "Nicht-Boden" (Hindernis) voneinander unterschieden werden können. Hierzu wird die Verwendung einer Kamera vorgeschlagen, die den Fahrboden erfasst. Die Bilddaten der Kamera werden an eine Bildverarbeitungseinrichtung gesandt, die den Fahrboden als zusammenhängendes Gebiet erkennt. Wird von der Kamera irgendein Objekt erfasst, das sich optisch von dem homogenen Fahrboden abhebt, so kann die Bildverarbeitungseinrichtung darauf reagieren. Bei dem Objekt kann es sich um ein dreidimensionales Hindernis, also einen Gegenstand oder eine Person, oder auch nur um eine Unterbrechung der Homogenität des Fahrbodens durch eine andere Farbgebung handeln. Im letzteren Fall kann dieses Gebiet beobachtet werden und gegebenenfalls bereits ein Warnhinweis ausgegeben werden. Da mit der Erfindung nicht der gesamte umgebende Raum des Flurförderzeugs überwacht werden muss, sondern lediglich eine Unterscheidung von Boden und "Nicht-Boden" erfolgt, ist der technische Aufwand gegenüber herkömmlichen kamerabasierten Systemen, die zur 3D-Navigation eingesetzt werden, deutlich geringer.

Vorzugsweise erfolgt durch die Bildverarbeitung eine Segmentierung und Klassifizierung des Fahrbodens. Beim Erkennen von Gebieten mit Struktur- und/oder Farbabweichungen werden diese beobachtet und bei Überschreiten eines vorgegebenen Abweichungsgrads wird eine Warnanweisung erstellt.

Erfindungsgemäß werden bei Fahrt des Flurförderzeugs odometrische Daten des Flurförderzeugs erfasst und zusätzlich zu den Bilddaten an die Bildverarbeitungseinrichtung geliefert. Unter odometrischen Daten versteht man insbesondere die aufgrund der Anzahl der Radumdrehungen des Flurförderzeugs sich ergebende zurückgelegte Wegstrecke. Aus den während der Fahrt zeitlich nacheinander aufgenommenen Bildern werden Stereobilder erzeugt, dessen Basislinie die aus den odometrischen Daten ermittelte Fahrdistanz darstellt.

Die Bildverarbeitungseinrichtung errechnet vorteilhafterweise aus der ermittelten Fahrdistanz Distanzinformationen zu jedem Punkt im gemeinsamen Stereobild. Somit kann nicht nur über die Kamera erkannt werden, ob sich andere Gegenstände oder Personen von dem homogenen Fahrboden optisch abheben, sondern es kann auch errechnet werden, in welcher Distanz sich diese befinden. Auch die Abmessungen des Hindernisses können auf diese Weise errechnet werden.

Gemäß einer besonders bevorzugten Ausführungsform der Erfindung errechnet die Bildverarbeitungseinrichtung aus den Stereobilddaten und den Distanzinformationen ein dreidimensionales Bild. Ein im dreidimensionalen Bild als Hindernis von der Bildverarbeitungseinrichtung erkanntes Objekt wird zweckmäßigerweise nach seinen dreidimensionalen Abmessungen ausgewertet, so dass situationsgerechte Handlungsanweisungen oder Steuerungsbefehle zur Kollisionsvermeidung erstellt werden können. Es kann gewarnt, angehalten oder ausgewichen werden.

Die Erfindung betrifft außerdem ein Flurförderzeug mit einer Einrichtung zur Kollisionsvermeidung, die eine Kamera sowie eine damit in Wirkverbindung stehende Bildverarbeitungseinrichtung aufweist, die ein erfindungsgemäßen Verfahren durchführt.

Bevorzugt weist das Flurförderzeug eine Einrichtung zur Erfassung von odometrischen Daten des Flurförderzeugs auf, welche ebenfalls mit der Bildverarbeitungseinrichtung in Wirkverbindung steht.

Gemäß einer vorteilhaften Weiterbildung des Erfindungsgedankens ist die Bildverarbeitungseinrichtung zur rechnerischen Erzeugung dreidimensionaler Darstellungen aus den von der Kamera aufgenommenen Bildern und den odometrischen Daten ausgebildet.

Mit der Erfindung wird insgesamt eine technisch elegante Lösung zur Kollisionsvermeidung zur Verfügung gestellt, die bei geringem Investitionsaufwand insbesondere in Einsatzgebieten mit im Wesentlichen homogenem Fahrboden, z.B. in Lagerhallen, einen sicheren manuellen, teilautomatisierten oder autonomen Betrieb eines Flurförderzeugs ermöglicht.

Im Vergleich zu Lasersystemen weist die erfindungsgemäße Lösung den Vorteil auf, dass anstelle eines teuren Laserscanners eine einfache Kamera verwendet werden kann. Außerdem entfällt die aufwendige Kalibrierung.

Verglichen mit Radar- oder Ultraschallsystemen bietet die Erfindung den Vorteil der besseren Auflösung, so dass eine feinere Reaktion auf Hindernisse ermöglicht wird.

Schließlich bietet die Erfindung auch entscheidende Vorteile gegenüber herkömmlichen kamerabasierten Navigationssystemen, die gegebenenfalls auch eine Kollisionsvermeidung bieten. Solche Systeme arbeiten üblicherweise mit Stereokameras zur Aufnahme von dreidimensionalen Bildern des gesamten Umgebungsraums. Dadurch wird auch eine entsprechend große Rechnerkapazität zur Verarbeitung der enormen Datenmengen benötigt. Die Erfindung ermöglicht dagegen den Einsatz eines einfachen monokularen Kamerasystems zur Überwachung eines sehr viel kleineren Raums (im Bereich des Fahrbodens) mit entsprechend geringerem Datenverarbeitungsaufwand.

Weitere Vorteile und Einzelheiten der Erfindung werden anhand des in den schematischen Figuren dargestellten Ausführungsbeispiels näher erläutert. Hierbei zeigt
- Figur 1: ein Flurförderzeug mit Kamera,
- Figur 2: ein Flurförderzeug mit Kamera und segmentiertem Boden,
- Figur 3: die Segmentierung eines Bodens,
- Figur 4: die Segmentierung von "Nicht-Boden" ,
- Figur 5: eine Darstellung des Beobachtens eines Hindernisses und
- Figur 6: eine Darstellung des Stereoeffektes beim Erfassen eines Hindernisses.

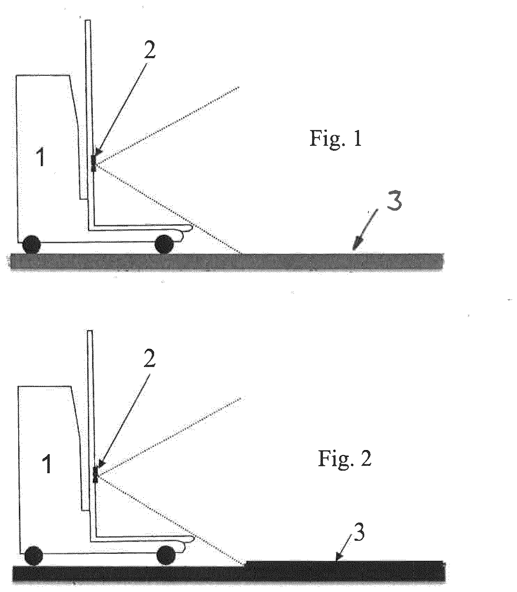

In den Beispielen der Figuren 1, 2, 5 und 6 handelt es bei dem Flurförderzeug um ein Flurförderzeug 1 mit einer Kamera 2, das sich auf dem Boden 3 (Fahrboden) einer Lagerhalle befindet. Da man in Lagerhallen von einem ebenen Boden mit einer sehr homogenen Struktur und Farbgebung ausgehen kann, ist es auf technisch einfache und kostengünstige Weise möglich, über die Kamera 2 und eine nachgeschaltete (in der Figur nicht dargestellte) Bildverarbeitungseinrichtung zu erkennen, ob sich Gegenstände oder Personen von diesem Boden 3 optisch abheben.

In Figur 1 ist dargestellt, wie die Kamera 2 auf den in Fahrtrichtung vor dem Flurförderzeug 1 liegenden Boden (Fahrboden) ausgerichtet ist, so dass das Bildverarbeitungssystem den Boden als zusammenhängendes Gebiet erkennen kann.

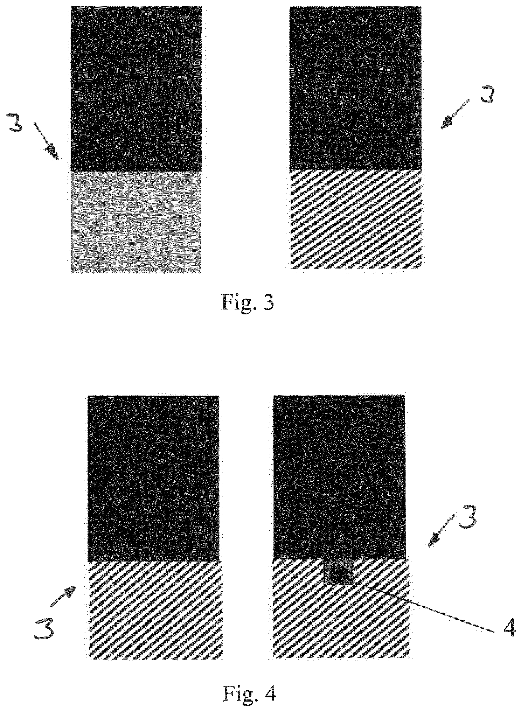

Im Beispiel von Figur 2 wird der Boden 3 vom Bildverarbeitungssystem erkannt, segmentiert und klassifiziert. Dabei ist in der Figur 3 dargestellt, wie die Kamera 2 den segmentierten Boden 3 erfasst.

Figur 3 zeigt die Segmentierung des Bodens 3 aus Figur 2 im Detail. Es sind beispielhaft zwei Kamerabilder dargestellt, die zeitlich nacheinander während der Fahrt des Flurförderzeugs entlang des segmentierten Bodens aufgenommen wurden. Die linke Aufnahme von Figur 3 wurde zuerst gemacht, danach die rechte. Die Kamera 2 des Flurförderzeugs 1 aus Figur 2 sieht während der Fahrt entlang des segmentierten Bodens 3 sozusagen zuerst die linke Abbildung aus Figur 3 und danach die rechte. Ist das von der Kamera 2 erfasste Gebiet auf Grund von Farbänderungen unterbrochen, so wird dies von der Bildverarbeitungseinrichtung erkannt. Diese Objekte werden dann genau beobachtet. Der Fahrer des Flurförderzeugs 1 kann schon gewarnt werden.

In Figur 4 ist wie in Figur 3 die Segmentierung des Bodens 3 gezeigt. In diesem Fall erfasst die Kamera 2 in der rechten Abbildung ein Objekt 4, das sich vom homogenen Boden 3 abhebt. Dieses Objekt 4 wird von der Bildverarbeitungseinrichtung als vermeintliches Hindernis 4 erkannt.

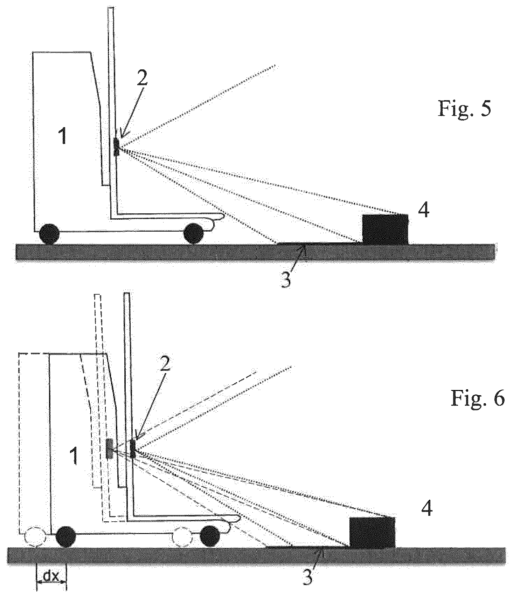

In Figur 5 ist dargestellt, wie die Kamera 2 des Flurförderzeugs 1 das auf dem segmentierten Boden 3 liegende vermeintliche Hindernis 4 beobachtet.

Figur 6 zeigt das Flurförderzeug 1 aus Figur 5 in einer Position, nachdem er sich um eine Fahrdistanz dx in Fahrtrichtung bewegt hat. Die Bildverarbeitungseinrichtung beobachtet über die Kamera 2 markante Punkte auf dem vermeintlichen Hindernis 4 und kann mit dem Wissen der zurückgelegten Fahrdistanz dx und des Stereoeffektes aufgrund der nacheinander während der Fahrt aufgenommenen Bilder die nötigen 3D-Informationen über das vermeintliche Hindernis 4 ermitteln. Diese 3D-Informationen können durch die Bildverarbeitungseinrichtung verarbeitet werden, so dass gezielt auf die Situation reagiert werden kann. Es kann gewarnt, angehalten oder ausgewichen werden.

## Patentansprüche

1. Verfahren zur Kollisionsvermeidung beim Betrieb eines Flurförderzeugs (1), wobei das Flurförderzeug (1) eine Kamera (2) aufweist, die einen Überwachungsbereich erfasst und die dabei ermittelten Bilddaten an eine Bildverarbeitungseinrichtung liefert, welche durch Auswertung der Bilddaten Handlungsanweisungen und/oder Steuerungsbefehle für den Betrieb des Flurförderzeugs (1) erstellt, **dadurch gekennzeichnet, dass** die Kamera (2) auf den in Fahrtrichtung vor dem Flurförderzeug (1) liegenden Fahrboden (3) ausgerichtet ist und einen in Fahrtrichtung vor dem Flurförderzeug (1) befindlichen Überwachungsbereich erfasst und die Kamera (2) einen im Überwachungsbereich liegenden Fahrboden (3) erfasst, die Bildverarbeitungseinrichtung aus den ermittelten Bilddaten den Fahrboden (3) als zusammenhängendes Gebiet erkennt und beim Erkennen von Objekten (4), die sich von diesem Fahrboden (3) abheben, die Handlungsanweisungen und/oder Steuerungsbefehle zur Kollisionsvermeidung erstellt, wobei bei Fahrt des Flurförderzeugs (1) odometrische Daten des Flurförderzeugs (1) erfasst und zusätzlich zu den Bilddaten an die Bildverarbeitungseinrichtung geliefert werden, die aus den während der Fahrt zeitlich nacheinander aufgenommenen Bildern Stereobilder erzeugt, dessen Basislinie die aus den odometrischen Daten ermittelte Fahrdistanz (dx) darstellt.

2. Verfahren nach Anspruch 1, **dadurch gekennzeichnet, dass** die Bildverarbeitung den Fahrboden (3) segmentiert und klassifiziert und beim Erkennen von Gebieten mit Struktur- und/oder Farbabweichungen diese beobachtet und bei Überschreiten eines vorgegebenen Abweichungsgrads eine Warnanweisung erstellt.

3. Verfahren nach Anspruch 1 oder 2, **dadurch gekennzeichnet, dass** die Bildverarbeitungseinrichtung aus der ermittelten Fahrdistanz (dx) Distanzinformationen zu jedem Punkt im gemeinsamen Stereobild errechnet.

4. Verfahren nach Anspruch 3, **dadurch gekennzeichnet, dass** die Bildverarbeitungseinrichtung aus den Stereobilddaten und den Distanzinformationen ein dreidimensionales Bild errechnet.

5. Verfahren nach Anspruch 4, **dadurch gekennzeichnet, dass** die Bildverarbeitungseinrichtung ein im dreidimensionalen Bild als Hindernis erkanntes Objekt (4) nach seinen dreidimensionalen Abmessungen auswertet und situationsgerechte Handlungsanweisungen oder Steuerungsbefehle zur Kollisionsvermeidung erstellt.

6. Flurförderzeug mit einer Einrichtung zur Kollisionsvermeidung, die eine Kamera sowie eine damit in Wirkverbindung stehende Bildverarbeitungseinrichtung aufweist, die ein Verfahren nach einem der Ansprüche 1 bis 5 durchführt.

7. Flurförderzeug nach Anspruch 6, **dadurch gekennzeichnet, dass** das Flurförderzeug (1) eine Einrichtung zur Erfassung von odometrischen Daten des Flurförderzeugs (1) aufweist, welche ebenfalls mit der Bildverarbeitungseinrichtung in Wirkverbindung steht.

8. Flurförderzeug nach Anspruch 7, **dadurch gekennzeichnet, dass** die Bildverarbeitungseinrichtung zur rechnerischen Erzeugung dreidimensionaler Darstellungen aus den von der Kamera aufgenommenen Bildern und den odometrischen Daten ausgebildet ist.

## Claims

1. Method for collision avoidance during the operation of an industrial truck (1), wherein the industrial truck (1) comprises a camera (2), which scans a monitoring region and transmits image data thus captured to an image processing apparatus which, by the evaluation of image data, generates instructions and/or control commands for the operation of the industrial truck (1), **characterized in that** the camera (2) is oriented in the direction of travel towards a surface of travel (3) ahead of the industrial truck (1), and scans a monitoring region ahead of the industrial truck (1) in the direction of travel, the camera (2) scans a surface of travel (3) which is located in the monitoring region, the image processing apparatus, from image data thus captured, identifies the surface of travel (3) as a coherent region and, in the event of the detection of objects (4) which contrast from the surface of travel (3), generates instructions and/or control commands for collision avoidance, whereas during the travel of an industrial truck (1), odometry data for the industrial truck (1) are captured and transmitted to the image processing apparatus, which generates stereo images from images which are captured in a temporally sequential manner during travel, the base line of which represents the distance of travel (dx) determined from odometry data.

2. Method according to Claim 1, **characterized in that** image processing involves segmentation and classification of the surface of travel (3) and, upon the detection of regions featuring deviations in structure and/or coloration, these regions are monitored and, in the event that a predefined degree of deviation is exceeded, a warning instruction is generated.

3. Method according to Claim 1 or 2, **characterized in that** the image processing apparatus, from the distance of travel (dx) thus determined, the image processing apparatus calculates distance information at each point in a common stereo image.

4. Method according to Claim 3, **characterized in that** the image processing apparatus generates a three-dimensional image from stereo image data and distance information.

5. Method according to Claim 4, **characterized in that** the image processing apparatus evaluates an object (4) in the three-dimensional image which is identified as an obstacle by reference to its three-dimensional measurements, and generates situationally appropriate instructions or control commands for collision avoidance.

6. Industrial truck having a device for collision avoidance, which comprises a camera and an image processing apparatus which is operatively connected thereto, and which executes a method according to one of Claims 1 to 5.

7. Industrial truck according to Claim 6, **characterized in that** the industrial truck (1) comprises an apparatus for the capture of odometry data for the industrial truck (1), which is also operatively connected to the image processing apparatus.

8. Industrial truck according to Claim 7, **characterized in that** the image processing apparatus is configured for the computerized generation of three-dimensional representations from images which are captured by the camera and from odometry data.

## Revendications

1. Procédé permettant d'éviter les collisions lors du fonctionnement d'un chariot de manutention (1), le chariot de manutention (1) présentant une caméra (2) qui détecte une zone de surveillance et qui fournit les données d'image déterminées à cette occasion à un dispositif de traitement d'image qui crée des consignes d'action et/ou des instructions de commande pour le fonctionnement du chariot de manutention (1) en évaluant les données d'image,
**caractérisé en ce que** la caméra (2) est orientée vers la piste au sol (3) située devant le chariot de manutention (1) dans le sens de la marche, et détecte une zone de surveillance se trouvant devant le chariot de manutention (1) dans le sens de la marche, et la caméra (2) détecte une piste au sol (3) située dans la zone de surveillance, le dispositif de traitement d'image identifie à partir des données d'image déterminées la piste au sol (3) comme une région cohérente, et crée les consignes d'action et/ou les instructions de commande pour éviter les collisions lorsque des objets (4) sont identifiés qui se détachent de cette piste au sol (3), dans lequel pendant le déplacement du chariot de manutention (1), des données odométriques du chariot de manutention (1) sont détectées et sont fournies en plus des données d'image au dispositif de traitement d'image qui génère des images stéréo à partir des images enregistrées successivement dans le temps pendant le déplacement et dont la ligne de base représente la distance parcourue (dx) déterminée à partir des données odométriques.

2. Procédé selon la revendication 1, **caractérisé en ce que** le traitement d'image segmente et classifie la piste au sol (3), et lorsque des régions avec des écarts de structure et/ou de couleur sont identifiées, les observe et crée un avertissement si un degré d'écart prédéfini est dépassé.

3. Procédé selon la revendication 1 ou 2, **caractérisé en ce que** le dispositif de traitement d'image calcule à partir de la distance parcourue (dx) déterminée des informations de distance pour chaque point sur l'image stéréo commune.

4. Procédé selon la revendication 3, **caractérisé en ce que** le dispositif de traitement d'image calcule une image tridimensionnelle à partir des données d'image stéréo et des informations de distance.

5. Procédé selon la revendication 4, **caractérisé en ce que** le dispositif de traitement d'image évalue un objet (4) identifié sur l'image tridimensionnelle comme un obstacle selon ses dimensions tridimensionnelles et crée des consignes d'action ou des instructions de commande adaptées à la situation afin d'éviter les collisions.

6. Chariot de manutention, comprenant un dispositif pour éviter les collisions qui présente une caméra ainsi qu'un dispositif de traitement d'image en relation fonctionnelle avec celui-ci et qui exécute un procédé selon l'une quelconque des revendications 1 à 5.

7. Chariot de manutention selon la revendication 6, **caractérisé en ce que** le chariot de manutention (1) présente un dispositif pour détecter des données odométriques du chariot de manutention (1) qui est également en relation fonctionnelle avec le dispositif de traitement d'image.

8. Chariot de manutention selon la revendication 7, **caractérisé en ce que** le dispositif de traitement d'image est réalisé pour générer par calcul des représentations tridimensionnelles à partir des images enregistrées par la caméra et des données odométriques.
